# EUROPEAN PATENT APPLICATION

(11) **EP 4 835 764 A1**
(43) Date of publication of application: **04.11.2026**
(21) Application number: 25172994.3
(22) Date of filing: 28.04.2025
(51) Int. Cl.: G06Q 10/08

(54) **TAMPER-PROOF STORAGE CONDITIONS TRACKING DEVICE**

(71) Applicant: Abid, Esteban, 1290 Genève (CH)
(72) Inventor: ABID, Esteban, 1290 Genève (CH); SCHMERBERG, Sebastian, 85276 Pfaffenhofen (DE)
(74) Representative: KATZAROV S.A.

(57) **Abstract**

The present invention relates to a Container storage conditions monitoring device, comprising a housing provided with an attachment surface and a plurality of sensors chosen in the group of a optical sensor, a temperature sensor, an orientation or acceleration sensor and a humidity sensor, and an anti-temper module, characterized in that said anti-temper module comprises an locking seal attaching the attachment surface of the housing to a container attachment portion surface and an anti-temper button protruding from the attachment surface adapted to be switched on when pressed against the container attachment portion surface upon attachment of the housing to the container by the anti-temper seal and to generate an alert upon any pressing state change.

## Description

### Technical Field

The present invention relates to the field of electrical engineering and electronics, in particular to low power tracking devices. More particularly, it relates to a temper-proof low power specific storage conditions tracker and preferably to a temper-proof low power bottle specific storage conditions tracker tracking the storage conditions of wine bottles over long periods of time and communicate these to a server or a remote computer such as a telephone or a tablet using various protocols.

### Background of the art

The wine and more generally spirit market is an enormous market where billions of bottle are produced, sod exchanged and consumed every year. The value of these products and especially wine, is subject to several variation depending on several factors such its origin but also its storage conditions.

Traditional wine authentication relies on expert evaluations, where professionals visually inspect the bottle's label, cork, and external wear to infer past storage conditions. This manual approach is subjective, expensive, and prone to error, often leading to disputes and inconsistencies. It does not provide an objective, continuous storage history and can only be conducted at a specific moment in time rather than over the lifespan of the bottle.

Therefore, some wine storage tracking device have been created. However they primarily revolves around cellar-wide monitoring systems, smart wine fridges, and expert visual assessments. However, these approaches suffer from significant limitations in the context of individual bottle traceability and tamper-proof storage validation. Moreover, the existing cellar-based tracking solutions, are not designed to be tamper-proof such that storage conditions can be manipulated or altered before a sale, creating a risk of falsified provenance. Moreover, Data is often stored in local logs or databases without secure transmission protocols, meaning that once the bottle leaves the monitored environment, verification is lost.

More generally, the existing storage tracking devices are designed for the user's awareness rather than providing a tamper-proof, verifiable proof of storage for transactions.

In this regard, a primary object of the invention is to solve the above-mentioned problems and more particularly to provide a device and a method adapted to perform a continuous and reliable temper-proof monitoring a bottle during its storage.

### Summary of the invention

The above problems are solved by a first aspect the present invention which relates to a container storage conditions monitoring device, comprising a housing provided with an attachment surface and a plurality of sensors chosen in the group of a optical sensor, a temperature sensor, an orientation or acceleration sensor and a humidity sensor, and an anti-temper module, characterized in that the anti-temper module comprises an locking seal attaching the attachment surface of the housing to a container attachment portion surface and an anti-temper button protruding from the attachment surface adapted to be switched on when pressed against the container attachment portion surface upon attachment of the housing to the container by the anti-temper seal and to generate an alert upon any pressing state change.

Advantageously, the locking seal is tensile enhanced self-locking cable adapted to be wrapped around the container attachment portion.

According to a preferred embodiment of the present invention, the anti-temper module further comprises a break-seal-sticker comprising a unique identifier mounted on each of the anti-temper seal, housing and container external surface upon use.

Preferably, the unique identifier is a QR code.

Advantageously, the container storage conditions monitoring device further comprises a wireless communication module adapted to communicate with a remote processing unit.

According to a preferred embodiment of the present invention, the container storage conditions monitoring device further comprises a rechargeable and/or exchangeable embedded power source.

Preferably, the container storage conditions monitoring device further comprises an embedded memory.

According to a another embodiment of the present invention, the container is a bottle and the anti-temper button is adapted to detect when the tracker gets removed from the bottleneck.

Preferably, the container is a crate and the anti-temper button is adapted to detect when the tracker gets removed from an attachment portion of the crate.

Advantageously, the container storage conditions monitoring device further comprises one or more LED adapted to indicate a working status of the device.

A second aspect of the invention relates to a container storage conditions monitoring kit comprising the container storage conditions monitoring device according the first aspect, a router and a remote computer, characterized in that the device monitors the environmental parameters through its sensors and constantly sends the monitored data to a memory through a router so as to be readable though the computer.

In a preferred manner, the device is adapted to monitor the environmental parameters through its sensors and send the monitored data to the computer at regular intervals.

Advantageously, the computer is adapted to judge whether the locking seal tension is below or above a predetermined threshold.

Preferably, the computer is adapted to run a tamper-proof blockchain ledger recording all storage conditions.

A third aspect of the invention relates to a container storage conditions monitoring method to be implemented in the container storage conditions monitoring kit according to the second aspect of the invention comprising the steps of attaching the container storage conditions monitoring device to the container through the locking seal of its anti-temper module, verifying the locking seal is firmly attached to the container such that the anti-temper button is pressed, attach a break-seal-sticker comprising a unique identifier and capture an image of the unique identifier to register the container, monitor the environmental data and register them in connection with the identified unique identifier of the container.

### Brief description of the drawings

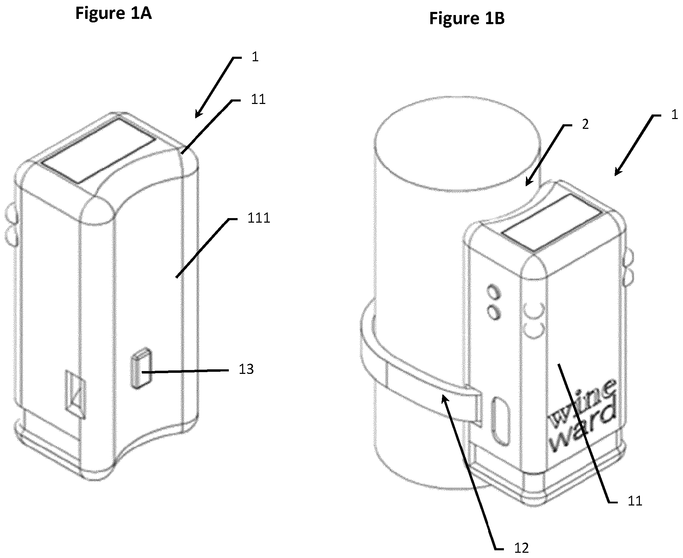

Further particular advantages and features of the invention will become more apparent from the following non-limitative description of at least one embodiment of the invention which will refer to the accompanying drawings, wherein Figures 1A and 1B schematically represent a back and a front isometric view of the device of the present invention.

### Detailed description of the invention

The present detailed description is intended to illustrate the invention in a non-limitative manner since any feature of an embodiment may be combined with any other feature of a different embodiment in an advantageous manner.

The problems described in the prior art description above are solved by the present invention which is schematically illustrated in Figures 1A and 1B showing the first aspect of the invention which is a container storage conditions monitoring device 1.

The container storage conditions monitoring device 1 of the present invention comprises a housing 11 provided with an attachment surface 111 and a plurality of sensors such that it can be attached to container of interest such as a bottle or a crate and monitor the environment through its sensors.

The sensors are chosen in the group of a optical sensor, a temperature sensor, an orientation or acceleration sensor and a humidity sensor.

In order to be able to provide reliable data, it is provided with an anti-temper module comprising an locking seal 12 attaching the attachment surface 111 of the housing 11 to a container attachment portion surface 2 and an anti-temper button 13 protruding from the attachment surface 111 adapted to be switched on when pressed against the container attachment portion surface 2 upon attachment of the housing 11 to the container by the anti-temper seal 12 and to generate an alert upon any pressing state change.

Preferably, the anti-temper module further comprises a break-seal-sticker such as QR code comprising a unique identifier mounted on each of the anti-temper seal 12, housing 11 and container external surface 2 upon use.

As we can see in figures 1A and 1B, here is presented the preferred embodiment where the container is a bottle and the anti-temper button 13 is adapted to detect when the tracker gets removed from the bottleneck 2 and the locking seal 12 is a tensile enhanced self-locking cable adapted to be wrapped around the container attachment portion here the bottleneck 2. In another embodiment, not illustrated in the drawings, the container is a crate and the anti-temper button 13 is adapted to detect when the tracker gets removed from an attachment portion of the crate.

In order to record the monitoring data sensed by the sensors, the device 1 further preferably comprises a wireless communication module adapted to communicate with a remote processing unit, a rechargeable and/or exchangeable embedded power source and an embedded memory. Furthermore, the container storage conditions monitoring device can comprise one or more LED adapted to indicate a working status of the device. Moreover, the housing is detachable and, after detachment, is resettable via an associated software application for subsequent attachment to another container.

A second aspect of the invention relates to a container storage conditions monitoring kit comprising the container storage conditions monitoring device described above, a router and a remote computer.

In this aspect, the device monitors the environmental parameters through its sensors and constantly, or at regular intervals, sends the monitored environmental parameter data to a memory through a router so as to be readable though the computer or to the computer directly. In the kit, the computer is adapted to judge whether the locking seal tension is below or above a predetermined threshold and to run a tamper-proof blockchain ledger recording all storage conditions.

A third aspect of the invention relates to a container storage conditions monitoring method to be implemented in the container storage conditions monitoring kit described above comprising the steps of attaching the container storage conditions monitoring device to the container through the locking seal of its anti-temper module, verifying the locking seal is firmly attached to the container such that the anti-temper button is pressed, attach a break-seal-sticker comprising a unique identifier and capture an image of the unique identifier to register the container, monitor the environmental data and register them in connection with the identified unique identifier of the container.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. Container storage conditions monitoring device (1), comprising
a housing (11) provided with an attachment surface (111) and a plurality of sensors chosen in the group of a optical sensor, a temperature sensor, an orientation or acceleration sensor and a humidity sensor, and an anti-temper module,
**characterized in that** said anti-temper module (12) comprises an locking seal (12) attaching the attachment surface (111) of the housing (11) to a container attachment portion surface (2) and an anti-temper button (13) protruding from the attachment surface (11) adapted to be switched on when pressed against the container attachment portion surface (2) upon attachment of the housing (11) to the container by the locking seal (12) and to generate an alert upon any pressing state change.

2. Container storage conditions monitoring device according to claim 1, **characterized in that** the locking seal (12) is tensile enhanced self-locking cable adapted to be wrapped around the container attachment portion (2).

3. Container storage conditions monitoring device according to claim 1 or 2, **characterized in that** said anti-temper module further comprises a break-seal-sticker comprising a unique identifier mounted on each of the anti-temper seal, the housing (11) and the container external surface (2) upon use.

4. Container storage conditions monitoring device according to any one of claims 1 to 3, **characterized in that** it further comprises a wireless communication module adapted to communicate with a remote processing unit.

5. Container storage conditions monitoring device according to any one of claims 1 to 4, **characterized in that** it further comprises a rechargeable and/or exchangeable embedded power source.

6. Container storage conditions monitoring device according to any one of claims 1 to 5, **characterized in that** it further comprises an embedded memory.

7. Container storage conditions monitoring device according to any one of claims 1 to 6, **characterized in that** the container is a bottle and the anti-temper button (13) is adapted to detect when the tracker gets removed from the bottleneck.

8. Container storage conditions monitoring device according to any one of claims 1 to 7, **characterized in that** the container is a crate and the anti-temper button (13) is adapted to detect when the tracker gets removed from an attachment portion of the crate.

9. Container storage conditions monitoring device according to any one of claims 1 to 8, **characterized in that** the device further comprises one or more LED adapted to indicate a working status of the device.

10. Container storage conditions monitoring device according to any preceding claim, wherein the housing is detachable and, after detachment, is resettable via an associated software application for subsequent attachment to another container.

11. Container storage conditions monitoring kit comprising the Container storage conditions monitoring device according to any one of claims 1 to 10, a router and a remote computer, **characterized in that** the device monitors the environmental parameters through its sensors and constantly sends the monitored data to a memory through a router so as to be readable though said computer.

12. Container storage conditions monitoring kit according to claim 11, **characterized in that** the device is adapted to monitor the environmental parameters through its sensors and send the monitored data to said computer at regular intervals.

13. Container storage conditions monitoring kit according to claim 11 or 12, **characterized in that** the computer is adapted to judge whether the locking seal tension is below or above a predetermined threshold.

14. Temper-proof bottle storage conditions monitoring kit according to any one of claims 11 to 13, **characterized in that** the computer is adapted to run a tamper-proof blockchain ledger recording all storage conditions.

15. Container storage conditions monitoring method to be implemented in the container storage conditions monitoring kit according to any one of claims 11 to 14 comprising the steps of
attaching the container storage conditions monitoring device to the container through the locking seal of its anti-temper module,
verifying the locking seal is firmly attached to the container such that the anti-temper button is pressed,
attach a break-seal-sticker comprising a unique identifier and capture an image of the unique identifier to register said container,
monitor the environmental data and register them in connection with the identified unique identifier of the container.
